# EUROPEAN PATENT APPLICATION

(11) **EP 4 460 093 A1**
(43) Date of publication of application: **06.11.2024**
(21) Application number: 22923506.4
(22) Date of filing: 09.12.2022
(51) Int. Cl.: H04W 40/04

(54) **METHOD AND APPARATUS FOR DETERMINING USER EQUIPMENT ROUTE SELECTION POLICY**

(30) Priority: 30.01.2022 CN 202210113563
(71) Applicant: Huawei Technologies Co., Ltd., Shenzhen, Guangdong 518129 (CN)
(72) Inventor: WEI, Xinpeng, Shenzhen, Guangdong 518129 (CN); ZHU, Fenqin, Shenzhen, Guangdong 518129 (CN)
(74) Representative: Körber, Martin Hans
(86) International application number: PCT/CN2022/137968
(87) International publication number: WO 2023/142717

(57) **Abstract**

Embodiments of this application provide a method and an apparatus for determining a user equipment route selection policy. The method may include: A first policy control network element obtains first information, where the first information is used to determine a first user equipment route selection policy. The first policy control network element sends the first user equipment route selection policy to first user equipment, where the first policy control network element belongs to a visited network of the first user equipment. According to this application, user equipment roams to a visited network, and a user equipment route selection policy may be determined by the first policy control network element based on the first information, so that the visited network may provide the user equipment route selection policy for the user equipment, to implement a route selection service of the user equipment in a roaming scenario.

## Description

This application claims priority to Chinese Patent Application No. 202210113563.6, filed with the China National Intellectual Property Administration on January 30, 2022 and entitled "METHOD AND APPARATUS FOR DETERMINING USER EQUIPMENT ROUTE SELECTION POLICY", which is incorporated herein by reference in its entirety.

### TECHNICAL FIELD

Embodiments of this application relate to the communication field, and more specifically, to a method and an apparatus for determining a user equipment route selection policy.

### BACKGROUND

A 5th generation (5th generation, 5G) mobile communication network is developing rapidly, and network capability exposure is an important function of the 5G network. The 5G network can provide an open network function for a third-party service provider, to enable the third-party service provider to have a capability of adjusting network configurations and network resources. In addition, an open network service may also be used as a charging service of an operator. Some network management rights are delegated to the third-party service provider to create a new network business operation mode. In the 3rd generation partnership project (3rd generation partnership project, 3GPP) R15 phase, for a 5G core network, some policy configuration solutions for users and services have been available, a user equipment route selection policy (User Equipment Route Selection Policy, URSP) is defined with a focus on service-level configuration and management policies, so as to provide flexible configuration and management methods for network slicing, service and session continuity, and other functions defined for the 5G core network.

In some cases, user equipment may leave coverage of a home public land mobile network (home public land mobile network, HPLMN), and access a visited public land mobile network (visited PLMN, VPLMN) in a roaming manner, and the VPLMN provides a service for the user equipment. In a roaming scenario, the user equipment route selection policy is an important factor to guarantee service configuration and management policies of the user equipment.

### SUMMARY

Embodiments of this application provide a method and an apparatus for determining a user equipment route selection policy, so that information for determining a route selection policy can be provided by user equipment in a roaming scenario, to obtain a user equipment route selection policy. This helps implement a route selection service of the user equipment and ensure continuity of a route selection policy of the user equipment in a visited network.

According to a first aspect, a method for determining a user equipment route selection policy is provided. The method includes: A first policy control network element obtains first information, where the first information is used to determine a first user equipment route selection policy. The first policy control network element sends the first user equipment route selection policy to first user equipment. The first policy control network element belongs to a visited network of the first user equipment.

According to the method provided in this embodiment of this application, the first policy control network element obtains the first information, where the first policy control network element belongs to the visited network of the first user equipment, and the first information is used to determine the first user equipment route selection policy. The first policy control network element sends the first user equipment route selection policy to the first user equipment. In a roaming scenario of the first user equipment, the first policy control network element that belongs to the visited network determines the user equipment route selection policy of the first user equipment based on the first information, to implement a route selection service of the first user equipment, and ensure continuity of a route selection policy of the first user equipment in the visited network.

With reference to the first aspect, in some implementations of the first aspect, the first information includes identification information of the first user equipment; or the first information includes identification information of a user equipment group to which the first user equipment belongs.

Based on the foregoing technical solution, the first information includes the identification information of the first user equipment, or includes the identification information of the user equipment group to which the first user equipment belongs. When the first information includes the identification information of the first user equipment, the first policy control network element determines information about the first user equipment route selection policy based on the first information, and sends the information about the first user equipment route selection policy to the first user equipment indicated by the identification information. When the first information includes the identification information of the user equipment group to which the first user equipment belongs, the first policy control network element determines information about the first user equipment route selection policy based on the first information, and sends the information about the first user equipment route selection policy to all first user equipment indicated by identification group information.

It should be noted that the first user equipment in this application may be any user equipment, and that the first policy control network element sends the first user equipment route selection policy to the first user equipment may alternatively mean that the first policy control network element sends the determined user equipment route selection policy to any user equipment in a network.

With reference to the first aspect, in some implementations of the first aspect, the first information includes first application description information and/or a route selection parameter.

Based on the foregoing technical solution, the first information includes the application description information and/or the route selection parameter. The first policy control network element determines the first user equipment route selection policy based on the application description information, the first policy control network element determines the first user equipment route selection policy based on the route selection parameter, or the first policy control network element determines the first user equipment route selection policy based on the application description information and the route selection parameter.

With reference to the first aspect, in some implementations of the first aspect, the first policy control network element determines the first user equipment route selection policy based on the first information.

With reference to the first aspect, in some implementations of the first aspect, the first information is from an application function. The first policy control network element receives second information from a second policy control network element. That the first policy control network element determines the first user equipment route selection policy based on the first information includes: The first policy control network element determines the first user equipment route selection policy based on the first information and the second information. The second policy control network element belongs to a home network of the first user equipment.

It should be understood that the first policy control network element receives the second information from the second policy control network element, and the first policy control network element may receive one piece of second information, or may receive a plurality of pieces of second information.

With reference to the first aspect, in some implementations of the first aspect, that a first policy control network element obtains first information includes: The first policy control network element receives the first information from a data management network element or a network exposure network element, where the data management network element and the network exposure network element belong to the visited network of the first user equipment.

With reference to the first aspect, in some implementations of the first aspect, before that the first policy control network element determines the first user equipment route selection policy based on the first information, the first policy control network element sends third information to the second policy control network element, where the third information includes one or more of the following: data network name DNN information, single network slice selection assistance information S-NSSAI, the first application description information, the route selection parameter, and route selection priority information.

With reference to the first aspect, in some implementations of the first aspect, the first policy control network element receives first indication information from the second policy control network element, where the first indication information indicates that the second policy control network element controls determining of the first user equipment route selection policy.

With reference to the first aspect, in some implementations of the first aspect, the first indication information indicates second application description information determined by the second policy control network element.

The first application description information is the same as or different from the second application description information. When the first application description information is different from the second application description information, the first policy control network element needs the first application description information and the second application description information when determining the first user equipment route selection policy. When the first application description information is the same as the second application description information, the first policy control network element needs the first application description information or the second application description information when determining the first user equipment route selection policy.

With reference to the first aspect, in some implementations of the first aspect, before that the first policy control network element determines the first user equipment route selection policy based on the first information, the first policy control network element receives second indication information from the second policy control network element, where the second indication information indicates that the first policy control network element determines the first user equipment route selection policy.

With reference to the first aspect, in some implementations of the first aspect, the second indication information indicates that the first policy control network element determines the first user equipment route selection policy corresponding to a first application. With reference to the first aspect, in some implementations of the first aspect, the first policy control network element receives deletion indication information. The first policy control network element deletes the first user equipment route selection policy based on the deletion indication information.

With reference to the first aspect, in some implementations of the first aspect, the second information includes one or more of the following: application description information, network slice selection information, session and service continuity SSC mode selection information, the data network name DNN information, protocol data unit PDU session type selection information, non-seamless offloading indication information or access type priority information, and the route selection parameter.

With reference to the first aspect, in some implementations of the first aspect, the first information further includes the data network name DNN information and/or the network slice selection information.

With reference to the first aspect, in some implementations of the first aspect, the first policy control network element sends identification information of the visited network to the first user equipment.

Optionally, the first policy control network element sends, to the first user equipment, the first user equipment route selection policy corresponding to the identification information of the visited network.

The first policy control network element sends the identification information of the visited network to the first user equipment, to enable the first user equipment to select the corresponding first user equipment route selection policy based on the identification information of the visited network, implement the route selection service of the first user equipment, and ensure the continuity of the route selection policy of the first user equipment in the visited network.

According to a second aspect, a method for determining a user equipment route selection policy is provided. The method includes: A second policy control network element determines second information, where the second information is used to determine a first user equipment route selection policy. The second policy control network element sends the second information to a first policy control network element. The first policy control network element belongs to a visited network of first user equipment, and the second policy control network element belongs to a home network of the first user equipment.

With reference to the second aspect, in some implementations of the second aspect, the second policy control network element receives third information sent by the first policy control network element, where the third information includes one or more of the following: data network name DNN information, single network slice selection assistance information S-NSSAI, first application description information, a route selection parameter, and route selection priority information.

With reference to the second aspect, in some implementations of the second aspect, the second policy control network element sends first indication information to the first policy control network element, where the first indication information indicates that the second policy control network element controls determining of the first user equipment route selection policy.

It should be noted that the first indication information indicates that the second policy control network element controls determining of the first user equipment route selection policy. The second policy control network element indicates, to the first policy control network element by using the first indication information, that the second policy control network element participates in a process of determining the first user equipment route selection policy.

With reference to the second aspect, in some implementations of the second aspect, the first indication information further indicates second application description information determined by the second policy control network element.

With reference to the second aspect, in some implementations of the second aspect, the second policy control network element sends second indication information to the first policy control network element, where the second indication information indicates that the first policy control network element determines the first user equipment route selection policy.

With reference to the second aspect, in some implementations of the second aspect, the second indication information further indicates that the first policy control network element determines the first user equipment route selection policy corresponding to a first application.

With reference to the second aspect, in some implementations of the second aspect, the second information includes one or more of the following: application description information, network slice selection information, session and service continuity SSC mode selection information, the data network name DNN information, protocol data unit PDU session type selection information, non-seamless offloading indication information or access type priority information, and the route selection parameter.

According to a third aspect, a method for determining a user equipment route selection policy is provided. The method includes: First user equipment receives a first user equipment route selection policy determined by a first policy control network element. The first user equipment establishes a protocol data unit session based on the first user equipment route selection policy. The first policy control network element belongs to a visited network of the first user equipment.

With reference to the third aspect, in some implementations of the third aspect, the first user equipment receives identification information of the visited network from the first policy control network element. That the first user equipment establishes a protocol data unit session based on the first user equipment route selection policy includes: The first user equipment establishes the protocol data unit session based on the identification information of the visited network and the first user equipment route selection policy.

Optionally, the identification information of the visited network corresponds to the first user equipment route selection policy, and the first user equipment establishes the protocol data unit session based on the first user equipment route selection policy corresponding to the identification information of the visited network.

It should be understood that the first user equipment selects the corresponding first user equipment route selection policy based on the identification information of the visited network, to implement a route selection service of the first user equipment, and ensure continuity of a route selection policy of the first user equipment in the visited network.

With reference to the third aspect, in some implementations of the third aspect, the first user equipment deletes an invalid first user equipment route selection policy.

According to a fourth aspect, a method for determining a user equipment route selection policy is provided. The method includes: A first policy control network element sends first information to a second policy control network element, where the first information is used to determine a first user equipment route selection policy, the first policy control network element belongs to a visited network of first user equipment, and the second policy control network element belongs to a home network of the first user equipment.

With reference to the fourth aspect, in some implementations of the fourth aspect, the method further includes: The first policy control network element receives the first information from an application function, where the first information is used to determine the first user equipment route selection policy.

With reference to the fourth aspect, in some implementations of the fourth aspect, the method further includes: The first policy control network element sends the first information to the second policy control network element based on first indication information.

With reference to the fourth aspect, in some implementations of the fourth aspect, the method further includes: The first policy control network element receives third indication information from the second policy control network element, where the third indication information indicates that the second policy control network element determines the first user equipment route selection policy.

With reference to the fourth aspect, in some implementations of the fourth aspect, the third indication information indicates the first policy control network element to send, to the second policy control network element, information used to determine the first user equipment route selection policy.

With reference to the fourth aspect, in some implementations of the fourth aspect, the first information includes one or more of the following: application description information, a route selection parameter, data network name DNN information, single network slice selection assistance information S-NSSAI, and network slice selection information.

According to a fifth aspect, a method for determining a user equipment route selection policy is provided. The method includes: A second policy control network element obtains first information. The second policy control network element sends a first user equipment route selection policy to first user equipment. The second policy control network element belongs to a home network of the first user equipment.

With reference to the fifth aspect, in some implementations of the fifth aspect, the first information includes identification information of the first user equipment; or the first information includes identification information of a user equipment group to which the first user equipment belongs.

With reference to the fifth aspect, in some implementations of the fifth aspect, the first information further includes first application description information and/or a route selection parameter.

With reference to the fifth aspect, in some implementations of the fifth aspect, the second policy control network element determines the first user equipment route selection policy based on the first information.

With reference to the fifth aspect, in some implementations of the fifth aspect, the second policy control network element receives the first information sent by a first policy control network element.

With reference to the fifth aspect, in some implementations of the fifth aspect, when the first information is from an application function network element, the method includes: The second policy control network element receives the first information sent by the first policy control network element. Alternatively, the second policy control network element receives the first information sent by a second network exposure function network element. Alternatively, the second policy control network element receives the first information sent by a second data management network element. The first policy control network element belongs to a visited network of first user equipment, the second network exposure function network element belongs to the home network of the first user equipment, and the second data management network element belongs to the home network of the first user equipment.

With reference to the fifth aspect, in some implementations of the fifth aspect, the second policy control network element receives request information sent by the first policy control network element.

With reference to the fifth aspect, in some implementations of the fifth aspect, the second policy control network element sends third indication information to the first policy control network element, where the third indication information indicates that the second policy control network element determines the first user equipment route selection policy.

With reference to the fifth aspect, in some implementations of the fifth aspect, the third indication information further indicates the first policy control network element to send, to the second policy control network element, information used to determine the first user equipment route selection policy.

With reference to the fifth aspect, in some implementations of the fifth aspect, the first information includes one or more of the following: data network name DNN information, single network slice selection assistance information S-NSSAI, network slice selection information, the first application description information, and the route selection parameter.

According to a sixth aspect, a method for determining a user equipment route selection policy is provided. The method includes: First user equipment receives a first user equipment route selection policy determined by a second policy control network element. The first user equipment establishes a protocol data unit session based on the first user equipment route selection policy. A first policy control network element belongs to a visited network of the first user equipment.

With reference to the sixth aspect, in some implementations of the sixth aspect, the first user equipment receives identification information that is of the visited network and that is sent by the second policy control network element. That the first user equipment establishes a protocol data unit session based on the first user equipment route selection policy includes: The first user equipment establishes the protocol data unit session based on the identification information of the visited network and the first user equipment route selection policy.

Optionally, the identification information of the visited network corresponds to the first user equipment route selection policy, and the first user equipment establishes the protocol data unit session based on the first user equipment route selection policy corresponding to the identification information of the visited network.

It should be understood that the first user equipment selects the corresponding first user equipment route selection policy based on the identification information of the visited network, to implement a route selection service of the first user equipment, and ensure continuity of a route selection policy of the first user equipment in the visited network.

With reference to the sixth aspect, in some implementations of the sixth aspect, the first user equipment deletes an invalid first user equipment route selection policy.

According to a seventh aspect, an apparatus for determining a user equipment route selection policy is provided. The apparatus includes a transceiver unit, configured to obtain first information, where the first information is used to determine a first user equipment route selection policy. The transceiver unit is further configured to send the first user equipment route selection policy to first user equipment. A first policy control network element belongs to a visited network of the first user equipment.

According to the apparatus provided in this embodiment of this application, the transceiver unit obtains the first information, where the transceiver unit belongs to the visited network of the first user equipment, and the first information is used to determine the first user equipment route selection policy. The transceiver unit sends the first user equipment route selection policy to the first user equipment.

With reference to the seventh aspect, in some implementations of the seventh aspect, the first information includes identification information of the first user equipment; or the first information includes identification information of a user equipment group to which the first user equipment belongs.

With reference to the seventh aspect, in some implementations of the seventh aspect, the first information further includes first application description information and/or a route selection parameter.

With reference to the seventh aspect, in some implementations of the seventh aspect, a processing unit determines the first user equipment route selection policy based on the first information.

With reference to the seventh aspect, in some implementations of the seventh aspect, the first information is from an application function. The transceiver unit receives second information from a second policy control network element. That a processing unit determines the first user equipment route selection policy based on the first information includes: The processing unit determines the first user equipment route selection policy based on the first information and the second information. The second policy control network element belongs to a home network of the first user equipment.

With reference to the seventh aspect, in some implementations of the seventh aspect, the transceiver unit obtains the first information, where the first information is from a data management network element or a network exposure network element, and the data management network element and the network exposure network element belong to the visited network of the first user equipment.

With reference to the seventh aspect, in some implementations of the seventh aspect, the transceiver unit sends one or more of the following to the second policy control network element: data network name DNN information, single network slice selection assistance information S-NSSAI, the first application description information, the route selection parameter, and route selection priority information.

With reference to the seventh aspect, in some implementations of the seventh aspect, the transceiver unit receives first indication information from the second policy control network element, where the first indication information indicates that the second policy control network element controls determining of the first user equipment route selection policy.

With reference to the seventh aspect, in some implementations of the seventh aspect, the first indication information indicates second application description information determined by the second policy control network element.

The first application description information is the same as or different from the second application description information. When the first application description information is different from the second application description information, the first policy control network element needs the first application description information and the second application description information when determining the first user equipment route selection policy.

With reference to the seventh aspect, in some implementations of the seventh aspect, the transceiver unit receives second indication information from the second policy control network element, where the second indication information indicates that the processing unit determines the first user equipment route selection policy.

With reference to the seventh aspect, in some implementations of the seventh aspect, the second indication information indicates that the first policy control network element determines the first user equipment route selection policy corresponding to a first application. With reference to the seventh aspect, in some implementations of the sixth aspect, the transceiver unit receives deletion indication information. The processing unit deletes the user equipment route selection policy based on the deletion indication information.

According to an eighth aspect, an apparatus for determining a user equipment route selection policy is provided. A processing unit determines second information, where the second information is used to determine a first user equipment route selection policy. A transceiver unit sends the second information to a first policy control network element. The first policy control network element belongs to a visited network of first user equipment, and the transceiver unit and the processing unit belong to a home network of the first user equipment.

With reference to the eighth aspect, in some implementations of the eighth aspect, the transceiver unit sends first indication information to the first policy control network element, where the first indication information indicates that a second policy control network element controls determining of the first user equipment route selection policy.

With reference to the eighth aspect, in some implementations of the eighth aspect, the transceiver unit sends the first indication information to the first policy control network element, where the first indication information further indicates second application description information determined by the second policy control network element.

With reference to the eighth aspect, in some implementations of the eighth aspect, the transceiver unit sends second indication information to the first policy control network element, where the second indication information indicates that the first policy control network element determines the first user equipment route selection policy.

With reference to the eighth aspect, in some implementations of the eighth aspect, the transceiver unit sends the second indication information to the first policy control network element, where the second indication information further indicates that the first policy control network element determines the first user equipment route selection policy corresponding to a first application.

With reference to the eighth aspect, in some implementations of the eighth aspect, the transceiver unit sends one or more of the following to the first policy control network element: data network name DNN information, single network slice selection assistance information S-NSSAI, application description information, a route selection parameter, and route selection priority information.

According to a ninth aspect, an apparatus for determining a user equipment route selection policy is provided. A transceiver unit receives a first user equipment route selection policy determined by a first policy control network element. A processing unit establishes a protocol data unit session based on the first user equipment route selection policy. The first policy control network element belongs to a visited network.

With reference to the ninth aspect, in some implementations of the ninth aspect, the transceiver unit receives identification information of the visited network from the first policy control network element. The processing unit establishes the protocol data unit session based on the first user equipment route selection policy.

With reference to the ninth aspect, in some implementations of the ninth aspect, the processing unit establishes the protocol data unit session based on the first user equipment route selection policy corresponding to the identification information of the visited network.

With reference to the ninth aspect, in some implementations of the ninth aspect, the processing unit deletes an invalid first user equipment route selection policy.

According to a tenth aspect, an apparatus for determining a user equipment route selection policy is provided. A transceiver unit sends first information to a second policy control network element, where the first information is used to determine a first user equipment route selection policy, the transceiver unit belongs to a visited network of first user equipment, and the second policy control network element belongs to a home network of the first user equipment.

With reference to the tenth aspect, in some implementations of the tenth aspect, the transceiver unit receives the first information from an application function, where the first information is used to determine the first user equipment route selection policy.

With reference to the tenth aspect, in some implementations of the tenth aspect, the transceiver unit receives third indication information from the second policy control network element, where the third indication information indicates that the second policy control network element determines the first user equipment route selection policy.

With reference to the tenth aspect, in some implementations of the tenth aspect, the third indication information indicates a first policy control network element to send, to the second policy control network element, information used to determine the first user equipment route selection policy.

With reference to the tenth aspect, in some implementations of the tenth aspect, the first information includes one or more of the following: application description information, a route selection parameter, data network name DNN information, single network slice selection assistance information S-NSSAI, and network slice selection information.

According to an eleventh aspect, an apparatus for determining a user equipment route selection policy is provided. A transceiver unit obtains first information. The transceiver unit sends a first user equipment route selection policy to first user equipment, where the transceiver unit belongs to a home network of the first user equipment.

With reference to the eleventh aspect, in some implementations of the eleventh aspect, the first information includes identification information of the first user equipment; or the first information includes identification information of a user equipment group to which the first user equipment belongs.

With reference to the eleventh aspect, in some implementations of the eleventh aspect, the first information further includes first application description information and/or a route selection parameter.

With reference to the eleventh aspect, in some implementations of the eleventh aspect, a processing unit determines the first user equipment route selection policy based on the first information.

With reference to the eleventh aspect, in some implementations of the eleventh aspect, when the first information is from an application function network element, the apparatus includes: The transceiver unit receives the first information sent by a first policy control network element. Alternatively, the transceiver unit receives the first information sent by a second data management network element. Alternatively, the transceiver unit receives the first information sent by a second network exposure function network element. The first policy control network element belongs to a visited network of the first user equipment, and the second network exposure function network element and the second data management network element belong to the home network of the first user equipment.

With reference to the eleventh aspect, in some implementations of the eleventh aspect, the transceiver unit receives request information sent by the first policy control network element.

With reference to the eleventh aspect, in some implementations of the eleventh aspect, the transceiver unit sends third indication information to the first policy control network element, where the third indication information indicates that the processing unit determines the first user equipment route selection policy.

With reference to the eleventh aspect, in some implementations of the eleventh aspect, the third indication information further indicates the first policy control network element to send, to a second policy control network element, information used to determine the first user equipment route selection policy.

With reference to the eleventh aspect, in some implementations of the eleventh aspect, the first information includes one or more of the following: data network name DNN information, single network slice selection assistance information S-NSSAI, network slice selection information, the first application description information, and the route selection parameter.

According to a twelfth aspect, an apparatus for determining a user equipment route selection policy is provided. The apparatus includes: a transceiver unit, configured to receive a first user equipment route selection policy determined by a second policy control network element; and a processing unit, configured to establish a protocol data unit session based on the first user equipment route selection policy. The processing unit and the transceiver unit belong to a visited network of first user equipment, and the second policy control network element belongs to a home network.

With reference to the twelfth aspect, in some implementations of the twelfth aspect, the transceiver unit receives identification information that is of the visited network and that is sent by the second policy control network element. That the processing unit establishes the protocol data unit session based on the first user equipment route selection policy includes: The processing unit establishes the protocol data unit session based on the identification information of the visited network and the first user equipment route selection policy.

With reference to the twelfth aspect, in some implementations of the twelfth aspect, the processing unit deletes an invalid first user equipment route selection policy.

According to a thirteenth aspect, a communication apparatus is provided. The apparatus is configured to perform the method in any one of the possible implementations of the first aspect to the sixth aspect. Specifically, the apparatus may include units and/or modules configured to perform the method in any one of the possible implementations of the first aspect to the sixth aspect, for example, a processing unit and/or a communication unit.

In an implementation, the apparatus is a network element. When the apparatus is a network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the network element. When the apparatus is a chip, a chip system, or a circuit used in the network element, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourteenth aspect, a communication apparatus is provided. The apparatus includes at least one processor, configured to execute a computer program or instructions stored in a memory, to perform the method in any one of the possible implementations of the first aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network element.

In another implementation, the apparatus is a chip, a chip system, or a circuit used in the network element.

According to a fifteenth aspect, a processor is provided in this application, and is configured to perform the methods provided in the foregoing aspects.

Unless otherwise specified, or if operations such as sending and obtaining/receiving related to the processor do not contradict an actual function or internal logic of the processor in related descriptions, the operations may be understood as operations such as outputting, receiving, and inputting of the processor, or may be understood as sending and receiving operations performed by a radio frequency circuit and an antenna. This is not limited in this application.

According to a sixteenth aspect, a computer-readable storage medium is provided. The computer-readable storage medium stores program code to be executed by a device, and the program code is used to perform the method in any one of the possible implementations of the first aspect to the sixth aspect.

According to a seventeenth aspect, a computer program product including instructions is provided. When the computer program product runs on a computer, the computer is enabled to perform the method in any one of the possible implementations of the first aspect to the sixth aspect.

According to an eighteenth aspect, a communication system is provided, including one or more of the foregoing first policy control network element, second policy control network element, and application function network element.

### BRIEF DESCRIPTION OF DRAWINGS

FIG. 1 is a schematic diagram of a network architecture;
FIG. 2 is a schematic diagram of HR roaming and LBO roaming;
FIG. 3 is a schematic diagram of signaling exchange of a URSP on user equipment;
FIG. 4 is a schematic diagram of accessing an edge service of a VPLMN by UE by using an HR session;
FIG. 5 is a schematic diagram of accessing an edge service of a VPLMN by UE by using an LBO session;
FIG. 6 is a schematic diagram of a method for determining a user equipment route selection policy according to an embodiment of this application;
FIG. 7 is a schematic diagram of another method for determining a user equipment route selection policy according to an embodiment of this application;
FIG. 8 is a schematic diagram of another method for determining a user equipment route selection policy according to an embodiment of this application;
FIG. 9 is a schematic diagram of another method for determining a user equipment route selection policy according to an embodiment of this application;
FIG. 10 is a schematic diagram of a method for deleting a user equipment route selection policy according to an embodiment of this application;
FIG. 11 is a schematic block diagram of an apparatus for determining a user equipment route selection policy according to an embodiment of this application; and
FIG. 12 is a schematic block diagram of another apparatus for determining a user equipment route selection policy according to an embodiment of this application.

### DESCRIPTION OF EMBODIMENTS

The following describes the technical solutions of embodiments of this application with reference to the accompanying drawings.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

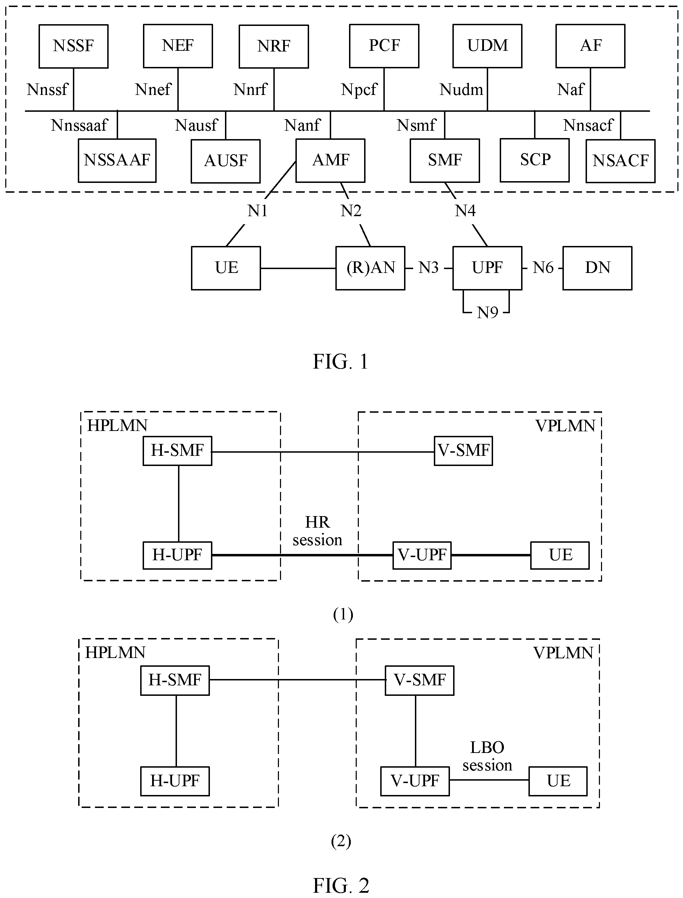

First, a network architecture to which this application is applicable is briefly described below with reference to FIG. 1.

For example, FIG. 1 is a schematic diagram of a network architecture.

As shown in FIG. 1, a 5G system (5th generation system, 5GS) is used as an example of the network architecture. The network architecture may include but is not limited to: a network slice specific authentication and authorization function (network slice specific authentication and authorization function, NSSAAF), a network slice selection function (network slice selection function, NSSF), an authentication server function (authentication server function, AUSF), a unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), a service communication proxy (service communication proxy, SCP), a network slice admission control function (network slice admission control function, NSACF), user equipment (user equipment, UE), a radio access network device, a user plane function (user plane function, UPF), a data network (data network, DN), and the like.

The following briefly describes network elements shown in FIG. 1.
1. UE: The UE may be referred to as user equipment, an access terminal, a subscriber unit, a subscriber station, a mobile station, a remote station, a remote terminal, a mobile device, a user terminal, a terminal, a wireless communication device, a user agent, or a user apparatus.

The user equipment may be a device that provides a voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, user equipment in a 5G network, user equipment in a future evolved public land mobile network (public land mobile network, PLMN), and the like. This is not limited in embodiments of this application.

By way of example, and not limitation, in embodiments of this application, the user equipment may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smartwatches or smart glasses, and include devices that dedicated to only one type of application function and need to collaboratively work with other devices such as smartphones, for example, various smart bands or smart jewelry for monitoring physical signs.

In addition, in embodiments of this application, the user equipment may alternatively be user equipment in an IoT system. An IoT is an important constituent part of future information technology development. A main technical feature of the IoT is connecting a thing to a network by using a communication technology, to implement an intelligent network for interconnection between a person and a machine or between things.

It should be noted that user equipment and an access network device may communicate with each other by using an air interface technology (for example, an NR technology or an LTE technology). User equipment may also communicate with other user equipment by using an air interface technology (for example, the NR technology or the LTE technology).

In embodiments of this application, an apparatus configured to implement a function of the user equipment may be user equipment, or may be an apparatus that can support the user equipment in implementing the function, for example, a chip system or a chip, and the apparatus may be mounted in the user equipment. In embodiments of this application, the chip system may include a chip, or may include a chip and another discrete component.

2. (Radio) access network ((radio) access network, (R)AN) device: The (radio) access network device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next-generation node base station (next-generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like. The AN device may allow interconnection and interworking between user equipment and a 3GPP core network by using the non-3GPP technology.

The AN device can be responsible for functions such as radio resource management, quality of service (quality of service, QoS) management, data compression and encryption on an air interface side. The AN device provides an access service for the user equipment, to complete forwarding of a control signal and user data between the user equipment and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP), may be a gNB or a transmission point (TRP or TP) in a 5G (for example, NR) system, or one antenna panel or a group (including a plurality of antenna panels) of antenna panels of a base station in a 5G system, or may be a network node constituting a gNB or a transmission point, for example, a distributed unit (distributed unit, DU), or a base station in a next-generation 6G communication system. Neither of a specific technology and a specific device form used for the AN device is limited in embodiments of this application.

3. AMF: The AMF is mainly used for functions such as access control, mobility management, and attachment and detachment.

4. SMF: The SMF is mainly used for user plane network element selection, user plane network element redirection, internet protocol (internet protocol, IP) address allocation for user equipment, and session management in a mobile network, for example, establishment, modification, and release of a session, and quality of service (quality of service, QoS) control.

5. UPF: The UPF is mainly used for receiving and forwarding of user plane data. For example, the UPF may receive user plane data from a DN, and send the user plane data to user equipment through an AN device. The UPF may further receive user plane data from the user equipment through the AN device, and forward the user plane data to the DN. A UPF that is directly connected to the DN through an N6 interface in a session may be referred to as a protocol data unit (protocol data unit, PDU) session anchor (PDU session anchor, PSA).

6. PCF: The PCF is mainly configured to guide a unified policy framework for network behavior, provide policy rule information for a control plane network element (for example, the AMF or the SMF), and so on.

7. AF: The AF is mainly configured to provide a service for a 3GPP network, for example, interact with the PCF to perform policy control.

8. Network slice selection function (network slice selection function, NSSF): The network slice selection function is mainly used for network slice selection.

9. Data management network element: The data management network element includes a unified data repository UDR network element and/or a unified data management (Unified Data Repository, UDM) network element, and is mainly used for subscription data management of the UE, including storage and management of a UE identifier, access authorization of the UE, and the like.

10. DN: The DN is an operator network mainly configured to provide a data service for the UE, for example, the internet (Internet), a third-party service network, and an IP multimedia service (IP multimedia service, IMS) network.

11. AUSF: The AUSF is mainly used for user authentication and the like.

12. NEF: The NEF is mainly configured to securely expose, to the outside, a service, a capability, and the like that are provided by a 3GPP network function.

13. NRF: The NRF is mainly configured to store a network function entity, description information of a service provided by the network function entity, and the like.

In the network architecture shown in FIG. 1, the network elements may communicate with each other through interfaces. For example, the UE is connected to the AN device according to a radio resource control (radio resource control, RRC) protocol, and the UE communicates with the AN device through a Uu interface. Alternatively, reference may be made to an interface shown in FIG. 1, and details are not described herein again.

It should be understood that the network architecture shown above is merely an example for description, and a network architecture to which embodiments of this application are applicable is not limited thereto. Embodiments of this application are applicable to any network architecture that can implement functions of the foregoing network elements. In addition, the network architecture shown above may further include more other network elements. This is not limited herein. For example, the architecture may further include an edge application server discovery function (edge application server discovery function, EASDF). The edge application server discovery function may also be referred to as, for example, an edge application (service) discovery function, an application instance discovery function, an edge application instance discovery function, or an MEC application (server) discovery function. This is not limited.

It should be further understood that the functions or the network elements such as the AMF, the SMF, the UPF, the PCF, the UDM, the NSSF, and the AUSF shown in FIG. 1 may be understood as network elements configured to implement different functions, for example, may be combined into a network slice based on a requirement. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

For ease of understanding of embodiments of this application, several basic concepts in embodiments of this application are briefly described. It should be understood that basic concepts described below are briefly described by using a basic concept specified in a current protocol as an example, but embodiments of this application are not limited to being applied only to a currently existing system. Therefore, names appearing when the currently existing system is used as an example for description are all functional descriptions, and specific names are not limited, indicate only functions, and may be correspondingly extended to another system, for example, a 6G or future communication system.

### 1. Mobile network roaming (roaming)

An operator A and an operator B are used as an example. Roaming refers to a case in which a mobile user belonging to the operator A accesses a network of the operator B. For the user, a network of the operator A may be considered as a home network (also referred to as a home network or a home network), and the network of the operator B may be considered as a visited network (also referred to as a visited network or a visited network).

A cellular mobile communication network of a standard of an operator may be referred to as a public land mobile network (public land mobile network, PLMN). A PLMN (namely, a home network) subscribed to by a user may be referred to as a home public land mobile network (public land mobile network, PLMN) (home PLMN, HPLMN), and a PLMN (namely, a visited network) to which the user roams may be referred to as a visited public land mobile network (visited PLMN, VPLMN).

In this application, for differentiation, an EASDF in the home network (namely, the HPLMN) is denoted as a home EASDF (home EASDF, H-EASDF), and an EASDF in the visited network (namely, the VPLMN) is denoted as a visited EASDF (visited EASDF, V-EASDF). An SMF in the home network is denoted as a home SMF (home SMF, H-SMF), and an SMF in the visited network is denoted as a visited SMF (visited SMF, V-SMF). A UPF in the home network is denoted as a home UPF (home UPF, H-UPF), and a UPF in the visited network is denoted as a visited UPF (visited UPF, V-UPF). In addition, for differentiation, a PSA in the home network is denoted as a home PSA (home PSA, H-PSA), and a PSA in the visited network is denoted as a visited PSA (visited PSA, V-PSA) (or denoted as a local PSA (local PSA, L-PSA)).

The visited network may also be referred to as a visited network, and an identifier of the visited network may be in a form of a PLMN ID, an MNO ID, or the like. This is not limited in this application.

Roaming scenarios are classified into local breakout (local breakout, LBO) roaming and home routed (home routed, HR) roaming. A main difference between the local breakout roaming and the home routed roaming lies in whether a session needs to be connected to the UPF of the home network. The following briefly describes the two types of roaming.

### (1) HR roaming

In an HR roaming scenario, a session (for example, a PDU session) is connected to a UPF of a home network (namely, an H-UPF).

In an example, (1) in FIG. 2 is a schematic diagram of an HR roaming scenario. As shown in (1) in FIG. 2, an HR session (for example, an HR PDU session) is a session that is established when a user is located in a visited network and that is connected to an H-UPF. Service traffic (traffic) carried in the HR session is sent from UE to the H-UPF, and then sent to a receiving end.

### (2) LBO roaming

In an LBO roaming scenario, a session (for example, a PDU session) is not connected to a UPF of a home network (namely, an H-UPF).

In an example, (2) in FIG. 2 is a schematic diagram of an LBO roaming scenario. As shown in (2) in FIG. 2, an LBO session (for example, an LBO PDU session) is a session that is established when a user is located in a visited network and that is connected to a V-UPF. Service traffic carried in the LBO session is directly sent locally in the visited network (namely, a VPLMN), and does not need to be sent back to a UPF of a home network (namely, an HPLMN) (namely, an H-UPF).

### 2. Service discovery of edge computing

In an edge computing deployment scenario, some services may be provided by a plurality of edge application servers EASs deployed at a network edge. The plurality of EASs may provide a same service and same content, and most of the EASs have different IP addresses. In the EC scenario, when accessing the service, UE may be requested to access an available EAS that is close to the UE. Therefore, it is important to obtain an IP address of an appropriate EAS.

In an example, the IP address of the EAS may be obtained by using a service discovery mechanism that is based on a domain name system (domain name system, DNS). Specifically, the IP address of the EAS may be obtained by using an edge service discovery mechanism, for example, through the following steps:
(1) When the UE needs to access an edge service, the UE initiates a DNS query (DNS query) message.
(2) An EASDF receives the DNS query message, and forwards the DNS query to an SMF.
(3) After receiving the DNS query, the SMF provides one piece of information that can reflect a location of the UE for the EASDF, for example, an EDNS client subnet option (Edns client subnet option, ECS option).
(4) The EASDF adds the ECS option to the DNS query message.
(5) The EASDF forwards the DNS query message to which the ECS option is added to a DNS server (for example, a central DNS server or a local DNS server).
(6) The DNS server determines a current location of the UE based on the ECS option carried in the DNS query, and then returns, to the UE by using a DNS response (DNS response), an IP address of an EAS close to the UE.

It may be understood that the foregoing steps are merely examples for description, and this is not limited.

### 3. User equipment route selection policy (user equipment route selection policy, URSP)

The user equipment route selection policy URSP is used to determine how UE routes uplink service traffic. For example, the service traffic is routed to an established PDU session, the service traffic is offloaded to non-3GPP access outside the PDU session, or establishment of a new PDU session is triggered. The URSP includes traffic descriptor information, route selection descriptor information, and route validity criterion information. The traffic descriptor information includes an application descriptor, DNS domain name information, data network name DNN information, and the like. The traffic descriptor information is used to determine a service targeted by a URSP rule. The route selection descriptor information includes session and service continuity SSC mode (Session and Service Continuity Mode) selection information, network slice selection information, the data network name DNN information, PDU session type selection information, a non-seamless offloading indication, an access type preference, and other information. The route validity criterion information includes time window information and location criterion information.

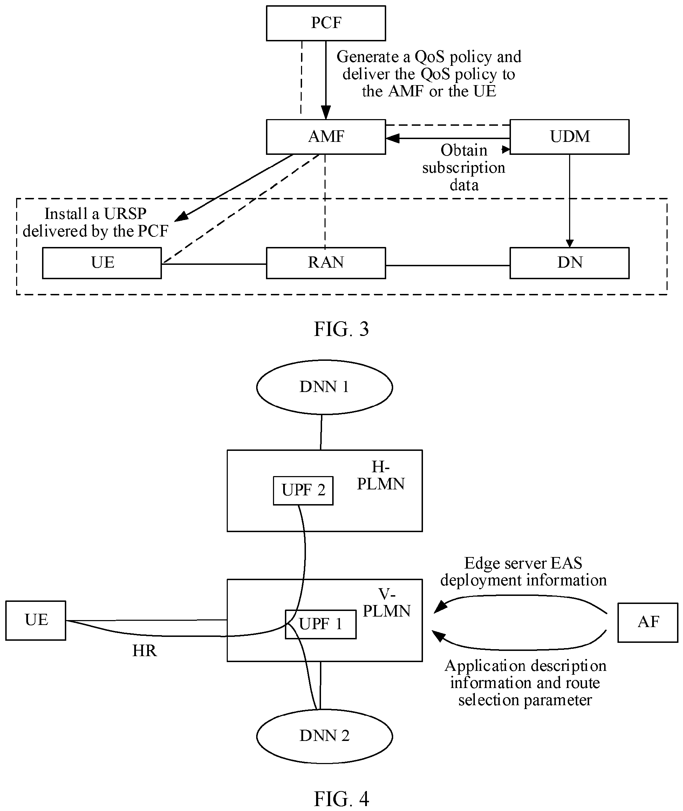

FIG. 3 shows a procedure of installing a URSP policy on user equipment.

The URSP is a user equipment policy UE policy, and is used to select an appropriate route for uplink traffic. The URSP may include a slice selection policy, an SSC mode selection policy, data network name DNN information, a PDU session type selection policy, a non-seamless offloading indication, and an access type preference. The URSP is used to assist the user equipment in selecting the appropriate route for the uplink traffic. For example, the uplink traffic is transmitted on an existing PDU session, the uplink traffic is offloaded to a non-3GPP access network for transmission, or establishment of a new PDU session (where the PDU session may be understood as a logical path that is established by a 5G network for the user equipment and that is connected to a data network) is triggered for transmission of the uplink traffic.

The URSP is determined by a PCF network element, then sent to the user equipment, and executed by the user equipment.

The URSP is used to assist the user equipment in selecting the appropriate route for the uplink traffic. Routing may be performed based on a requirement of a current application of a user for "best experience". For example, based on uplink traffic in a normal condition of creating a PDU session by the user, routing is periodically performed based on a common scenario, to be specific, by using common data network name DNN information defined by an operator, a slice type, and the like. However, when the user creates the PDU, if the terminal application has special requirements on network experience such as a "high rate" and a "low delay", the URSP enables the uplink traffic to be routed in a "customized routing mode" instead of a "common routing" mode.

Therefore, content defined by the URSP should be a group of user equipment route selection parameters. According to a 3GPP specification, one URSP rule includes one traffic descriptor and one or more components.

Each URSP rule includes one traffic descriptor, and the traffic descriptor is used to determine when a rule delivered by the PCF is applicable. When each component in the traffic descriptor matches corresponding information from the application, the URSP rule is determined as applicable. For any given component in the traffic descriptor, if the terminal application does not respond to the URSP rule delivered by the PCF or response information does not match the traffic descriptor in the rule delivered by the PCF, the URSP rule is determined as inapplicable.

The component may include one or more of the following: a slice selection policy, an SSC mode selection policy, the data network name DNN information, a PDU session type selection policy, a non-seamless offloading indication, an access type preference, and other content.

Slice selection policy: The slice selection policy is used by the UE to associate a matched application (for example, a video app) with single network slice selection assistance information (S-NSSAI).

SSC mode selection policy: The SSC mode selection policy is used by the UE to associate the matched application with an SSC mode.

Data network name DNN information: The data network name information is used by the UE to associate the matched application with the data network name DNN.

PDU session type selection policy: The PDU session type selection policy is used by the UE to associate the matched application with a PDU session type.

Non-seamless offloading indication: The non-seamless offloading indication is used by the UE to determine that the matched application is non-seamlessly offloaded to non-3GPP access (to be specific, outside the PDU session).

Access type preference: If the UE needs to establish the PDU session for the matched application, the access type preference indicates a prioritized access type (3GPP, non-3GPP, or multi-access).

A working procedure of the URSP is herein described. The working procedure of the URSP is mainly divided into the following steps: First, after the user equipment goes online, the user equipment initiates a URSP policy request to the PCF network element via an AMF network element, and the PCF delivers a URSP policy to the user equipment. The user equipment installs the URSP policy, and initiates a protocol data unit session establishment request for an application that matches a traffic descriptor in the URSP policy and that is on the terminal. In a process in which the user equipment establishes a protocol data unit session, a specific "network parameter" (namely, the foregoing parameter information such as the DNN selection information and the SSC mode) carried in a component in a URSP rule of the user equipment is matched with an actual network resource. After all components in the URSP are successfully matched, a network establishes a PDU session for the application corresponding to the user equipment, in other words, allocates a network resource that meets a request of the user equipment, to provide a network service for the user equipment.

Currently, for roaming UE, only an HPLMN provides a URSP. However, in some scenarios, an application service provider may deploy an application only in a VPLMN, and the HPLMN cannot obtain related application information. For example, in an edge computing scenario, an AF is an edge application that should be deployed only in the VPLMN to which the UE belongs, and the HPLMN cannot obtain edge application information. In this case, the HPLMN cannot determine a user equipment route selection policy for the UE based on the edge application information.

As shown in FIG. 4, UE accesses an edge service in a VPLMN by using an HR session, in other words, edge service traffic is carried on the HR session.

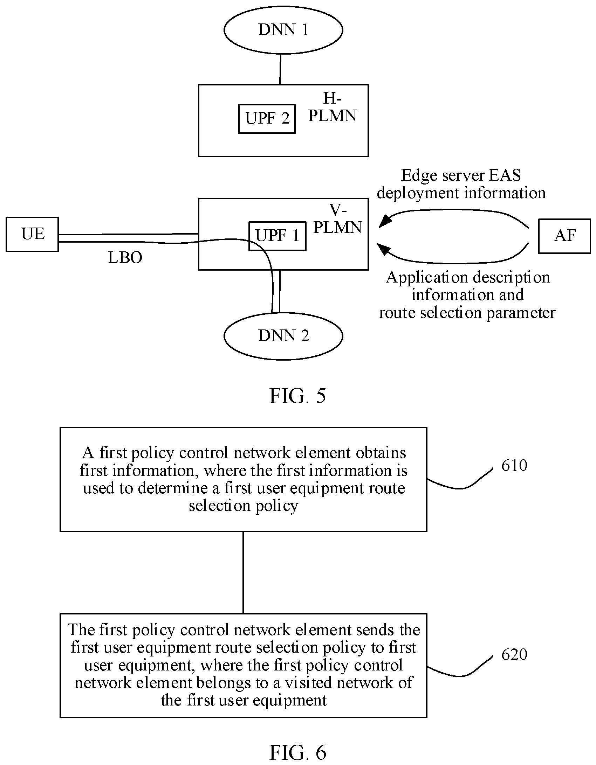

As shown in FIG. 5, UE accesses an edge service in a VPLMN by using an LBO session, in other words, edge service traffic is carried on the LBO session.

It should be understood that, edge application server EAS deployment information sent by the AF to the VPLMN network refers to edge application server (EAS) deployment information in an edge data network. For example, Tencent deploys information about a video server of Tencent in an edge data network of China Mobile. A third-party application may send EAS Deployment Info to a 5G network via the AF. In this case, to control a service of a third party to access a corresponding edge application server, the third party may further provide, via the AF, information for determining a URSP for the service, and send the information to the 5G network.

It should be further understood that, in this scenario, the AF is connected to the HPLMN (where for example, there may be no such connection relationship between an AF of YouTube and a network of China Mobile).

It may be understood that the term "and/or" in this specification describes only an association relationship between associated objects, and indicates that three relationships may exist. For example, A and/or B may indicate the following three cases: Only A exists, both A and B exist, and only B exists. In addition, the character "/" in this specification usually indicates an "or" relationship between the associated objects.

The following describes in detail a communication method provided in embodiments of this application with reference to the accompanying drawings. Embodiments provided in this application may be applied to the network architecture shown in FIG. 1. The network architecture is not limited in this application.

For ease of understanding of embodiments of this application, it should be noted that "first" and "second" shown in this application are merely for ease of description, are used to distinguish objects, are not used to limit the scope of embodiments of this application, and are not for describing a particular order or sequence. It should be understood that the objects described in this way are interchangeable in a proper circumstance, so that a solution other than embodiments of this application can be described.

With reference to the accompanying drawings, the following describes in detail a method for determining a user equipment route selection policy provided in embodiments of this application. FIG. 6 is a schematic diagram of a method for determining a user equipment route selection policy according to an embodiment of this application. The method in FIG. 6 includes the following steps.

610: A first policy control network element obtains first information, where the first information is used to determine a first user equipment route selection policy.

Optionally, the first information includes identification information of first user equipment, or identification information of a user equipment group to which the first user equipment belongs.

Optionally, the first information further includes first application description information and/or route selection information.

Optionally, the first information further includes network slice selection information and/or data network name DNN information.

Specifically, the application description information may include one or more of the following: an operating system identifier (operating system identifier, OSId), an operating system specific application identifier (operating system specific application identifier, OSAppid), IP triplet information, fully qualified domain name (fully qualified domain name, FQDN) information, information about an application identifier (Application identifier), the data network name DNN information, connection capability information, and the like. This is not limited in this application.

It should be understood that the application description information corresponds to traffic descriptor (Traffic Descriptor) information in the first user equipment route selection policy. Alternatively, it may be understood that the application description information is used to set traffic descriptor (Traffic Descriptor) information in the first user equipment route selection policy. The application description information may also be referred to as application service description information, application service descriptor information, or the like.

Specifically, a route selection parameter includes one or more of the following: the data network name DNN information, single network slice selection assistance information S-NSSAI, a route selection priority, spatial validity condition information, and the like. This is not limited in this application.

It should be understood that the route selection parameter corresponds to route selection descriptor (Route Selection Descriptor) information in the first user equipment route selection policy. Alternatively, it may be understood that the route selection parameter is used to set route selection descriptor information in the first user equipment route selection policy.

A form of the first information is not limited in this application. For example, the first information may be an information element, a parameter, in a form of a table, or the like. The following provides descriptions with reference to content that may be included in the first information.

620: The first policy control network element sends the first user equipment route selection policy to the first user equipment, where the first policy control network element belongs to a visited network of the first user equipment.

It should be understood that the first policy control network element belongs to the visited network in which the first user equipment is currently located, and the visited network is a current serving network (Serving PLMN) of the first user equipment.

Before the first policy control network element sends the first user equipment route selection policy to the first user equipment, the first policy control network element determines the first user equipment route selection policy based on the obtained first information, or the first policy control network element determines the first user equipment route selection policy based on the obtained first information and other information. The other information may be second information or other related information used to determine the first user equipment route selection policy. This is not limited in this application.

It should be understood that the first information is from an application function network element. The second information is sent by a second policy control network element to the first policy control network element based on request information of the first policy control network element. Alternatively, the second information may be actively sent by a second policy control network element to the first policy control network element based on an internal protocol specification of the second policy control network element, in other words, the second policy control network element does not need to send the second information to the first policy control network element based on request information.

It should be further understood that the first information in this embodiment is from the application function network element, the second information is sent by the second policy control network element to the first policy control network element, and the first information and the second information each are parameter information used to determine the first user equipment route selection policy. The first information may be the same as or different from the second information.

In an example, when the first information is completely the same as the second information, the first policy control network element determines the first user equipment route selection policy based on the first information or the second information. This may also be referred to as that the first policy control network element determines the first user equipment route selection policy based on the first information.

In another example, when the first information is different from the second information, for example, the first information does not include network-related information, but the second information includes network-related information (for example, PDU session type selection information and access type priority information), the first policy control network element determines the first user equipment route selection policy based on the first information and the second information.

In another example, when the first information is partially the same as the second information, for example, the first information includes single network slice selection assistance information S-NSSAI, the second information also includes single network slice selection assistance information S-NSSAI, and the two pieces of single network slice selection assistance information S-NSSAI are different, the first policy control network element determines, according to a preset rule, whether to specifically use the single network slice selection assistance information S-NSSAI in the first information or the single network slice selection assistance information S-NSSAI in the second information to set a related parameter in the first user equipment route selection policy.

It should be further understood that, in this application, content of the first information and content of the second information may be separately transmitted in a form of a plurality of independent parameters, or may be transmitted in a same piece of information. This is not limited in this application.

Based on the foregoing technical solution, the first user equipment roams from a home network (an HPLMN) to the visited network (a VPLMN), and the first user equipment route selection policy received by the first user equipment is provided by the first policy control network element (for example, a V-PCF) in the visited network. The first policy control network element determines the first user equipment route selection policy based on the first information, to guarantee a route selection policy of user equipment in a roaming environment. For example, if the user equipment roams to a visited network, a user equipment route selection policy in the visited network may be provided for the user equipment based on the solution provided in this application.

It should be noted that the first policy control network element in this application may alternatively be a first policy control function network element, and the second policy control network element may alternatively be a second policy control function network element. This is not limited in this application.

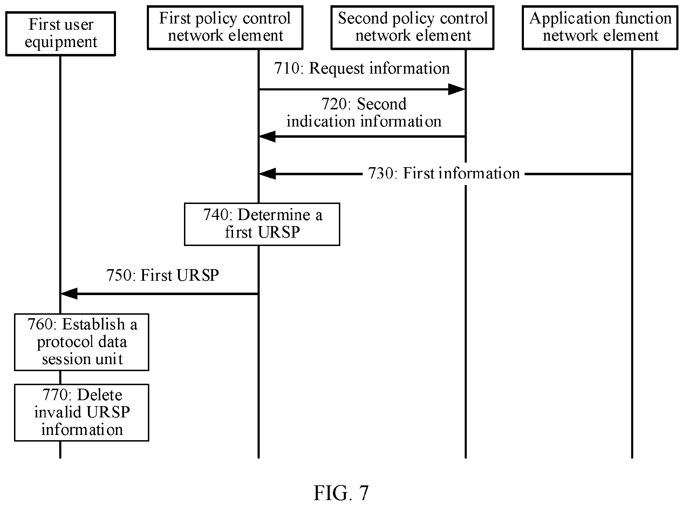

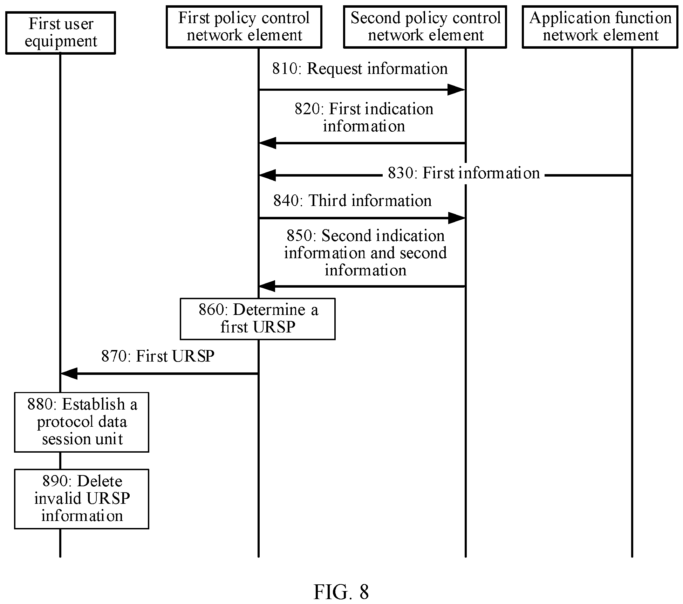

For ease of understanding of the method shown in FIG. 6, the following separately describes in detail, with reference to FIG. 7 and FIG. 8, possible implementations of the method in which the first policy control network element determines the first user equipment route selection policy in FIG. 6. In the following examples, a first policy control network element (for example, a V-PCF) belongs to a visited network of user equipment, and a second policy control network element (for example, an H-PCF) belongs to a home network of the user equipment. For details about related steps, refer to the foregoing descriptions.

FIG. 7 is a schematic flowchart of a method for determining a user equipment route selection policy according to an embodiment of this application. In the method shown in FIG. 7, a first policy control network element determines a first user equipment route selection policy based on first information from an application function. Alternatively, a first policy control network element receives second indication information sent by a second policy control network element. When the second indication information indicates that the first policy control network element determines a first user equipment route selection policy, the first policy control network element receives the second indication information and determines a first user equipment route selection policy based on first information from an application function. When the second indication information indicates that the first policy control network element determines a user equipment route selection policy corresponding to a first application, the first policy control network element receives the second indication information and determines, based on first information from an application function, a first user equipment route selection policy corresponding to the first application. The method shown in FIG. 7 includes the following steps.

710: The first policy control network element sends request information to the second policy control network element, or the second policy control network element receives request information sent by the first policy control network element.

The request information is used to establish a user equipment policy association (UE Policy Association) for user equipment.

It should be understood that, in an HR roaming scenario, the user equipment policy association that is for the user equipment and that is established between the first policy control network element and the second policy control network element is mainly used to exchange related information about the first user equipment route selection policy between the first policy control network element and the second policy control network element.

720: The second policy control network element sends the second indication information to the first policy control network element, or the first policy control network element receives the second indication information from the second policy control network element.

Specifically, after the user equipment policy association is established between the second policy control network element and the first policy control network element, the second policy control network element sends the second indication information to the first policy control network element.

It should be understood that the second indication information indicates that the first policy control network element determines the first user equipment route selection policy. It should be further understood that the second policy control network element determines, based on the request information from the first policy control network element, whether the first policy control network element can determine the first user equipment route selection policy. When the second policy control network element considers that the first policy control network element can determine the first user equipment route selection policy, the second policy control network element sends the second indication information to the first policy control network element.

Optionally, the second indication information further indicates that the first policy control network element determines the first user equipment route selection policy corresponding to the first application.

It should be understood that the second indication information indicates that the first policy control network element determines the user equipment route selection policy corresponding to the first application. The first application is determined by second policy control network element according to a protocol of the second policy control information, based on subscription information between a home network of first user equipment and a visited network of the first user equipment, or based on capability information of the first policy control network element. Specifically, information about the first application has many forms, for example, FQDN information and/or information about an application identifier (Application id). This is not limited in this application.

It should be noted that the first user equipment route selection policy corresponding to the first application may be understood as that the first user equipment route selection policy includes application descriptor information of the first application, the first user equipment route selection policy is applied to the first application, the first user equipment route selection policy is used to control service traffic of the first application, a traffic descriptor in the first user equipment route selection policy includes application descriptor information of the first application, or the first user equipment route selection policy is applied to service traffic of the first application.

It should be further noted that the first application may be one or more applications, and the first application may be sent to the first policy control network element as a part of content of the second indication information, or the information about the first application and the second indication information are separately sent to the first policy control network element as two information elements. For example, the first application may alternatively be included in other information sent by the second policy control network element to the first policy control network element, for example, domain information. When the second indication information indicates that the first policy control network element determines a first user equipment route selection policy, the second policy control network element further sends the domain information to the first policy control network element, where the domain information indicates a service scope (for example, the first application) of application description information of the first user equipment route selection policy determined by the first policy control network element, and the first policy control network element determines the corresponding first user equipment route selection policy based on the first information.

It should be understood that when the information about the first application and the second indication information are separately used as two information elements, the second policy control network element sends the information about the first application and the second indication information to the first policy control network element, to indicate that the first policy control network element determines the user equipment route selection policy corresponding to the first application. In this way, after receiving the second indication information, the first policy control network element determines the first user equipment route selection policy corresponding to the first application.

Optionally, a case in which the second policy control network element sends the second indication information to the first policy control network element is not limited to occurring after the first policy control network element establishes the association with the second policy control network element, and may occur in a process in which the first policy control network element establishes the association with the second policy control network element. This is not limited in this application.

730: The first policy control network element receives the first information from an application function network element.

It should be understood that step 730 may be performed before or after the first policy control network element sends the request information in step 710, and there is no time sequence limitation on receiving the first information from the application function network element by the first policy control network element.

It should be further understood that, in this application, the first policy control network element may receive the first information from the application function network element via another network element. For example, the application function network element first sends the first information to a network exposure network element (NEF), and then the network exposure network element sends the first information to the first policy control network element. For another example, the application function network element sends the first information to a data management network element (a unified data repository network element (UDR) and/or a unified data management network element (UDM)) in the visited network via a network exposure network element, and then the data management network element sends the first information to the first policy control network element.

Specifically, the application function network element stores the first information in the data management network element via the network exposure network element, so that the first policy control network element subscribes to or requests the first information from the data management network element. Optionally, the first information includes first application description information and/or the route selection parameter, as described in step 601 in FIG. 6. To avoid redundancy, details are not described herein again.

740: The first policy control network element determines the first user equipment route selection policy based on the first information.

It should be understood that the first policy control network element may determine the first user equipment route selection policy based on the first information from the application function network element. Alternatively, the first policy control network element receives the second indication information sent by the second policy control network element. When the second indication information indicates that the first policy control network element determines the first user equipment route selection policy, the first policy control network element receives the second indication information and determines the first user equipment route selection policy based on the first information from the application function. When the second indication information indicates that the first policy control network element determines the user equipment route selection policy corresponding to the first application, the first policy control network element receives the second indication information and determines, based on the first information from the application function, the first user equipment route selection policy corresponding to the first application, or the first policy control network element receives other information (for example, PDU session type selection information, non-seamless offloading indication information, and access type priority information) used to determine the first user equipment route selection policy, and determines the first user equipment route selection policy based on the first information from the application function network element and the other received information used to determine the first user equipment route selection policy. The other information used to determine the first user equipment route selection policy may be from the second policy control network element, the first policy control network element, or another network element in the visited network to which the first user equipment belongs. This is not limited in this application.

In an example, the first information includes the first application description information and a route selection parameter, the first application description information includes an FQDN #1, and the route selection parameter includes a DNN #1 and S-NSSAI #1. In this case, the first policy control network element determines the first user equipment route selection policy based on the first information, where traffic descriptor information in the first user equipment route selection policy includes the FQDN #1, and route selection descriptor information includes the DNN #1 and the S-NSSAI #1.

In another example, the first information includes the first application description information and a route selection parameter, the first application description information includes an FQDN #1, the route selection parameter includes a DNN #1 and S-NSSAI #1 information, and second information includes SSC mode selection information, namely, an SSC mode #1. In this case, the first policy control network element determines the first user equipment route selection policy based on the first information and the second information, where traffic descriptor information in the first user equipment route selection policy includes the FQDN #1, and route selection descriptor information includes the DNN #1, the S-NSSAI #1, and the SSC mode #1.

750: The first policy control network element sends the first user equipment route selection policy to the first user equipment, and correspondingly, the first user equipment receives the first user equipment route selection policy from the first policy control network element.

It should be further understood that the first policy control network element sends a network identifier of the visited network to the first user equipment.

The network identifier of the visited network identifies a network corresponding to the first user equipment route selection policy. Specifically, the first policy control network element sends the network identifier of the visited network and the first user equipment route selection policy to the first user equipment, or the first policy control network element includes the network identifier of the visited network in the first user equipment route selection policy and sends the first user equipment route selection policy to the first user equipment.

760: The first user equipment receives the first user equipment route selection policy, and executes the received first user equipment route selection policy.

Optionally, when executing the first user equipment route selection policy, the first user equipment finds, by using identification information of the visited network, a first user equipment route selection policy corresponding to the current visited network, and establishes a protocol data session unit session based on the first user equipment route selection policy.

It should be understood that, when the user equipment receives user equipment route selection policies corresponding to a plurality of different pieces of network identification information, the user equipment preferentially selects a user equipment route selection policy corresponding to identification information of the current network, and establishes a protocol data session unit.

Optionally, the first user equipment receives the first user equipment route selection policy, and transmits, by using an existing protocol data unit session that matches the first user equipment route selection policy, a user service corresponding to the first user equipment route selection policy.

770: The first user equipment deletes an invalid user equipment route selection policy.

It should be understood that, when the first user equipment moves out of the current visited network, the first user equipment route selection policy previously determined by the first policy control network element is invalid information, so that the first user equipment can delete an invalid user equipment route decision selection policy.

It should be noted that, in the method shown in FIG. 7, step 710 and step 720 are optional steps. In some implementations, offline negotiation is performed between the visited network and the home network. For example, an SLA contract is signed to specify that the first policy control network element determines the first user equipment route selection policy and/or specify that the first policy control network element determines a first user equipment route selection policy corresponding to some applications.

FIG. 8 shows another method for determining a user equipment route selection policy. Compared with the method shown in FIG. 7, in this method, that a second policy control network element sends first indication information to a first policy control network element is added, where the first indication information indicates that the second policy control network element participates in determining a first user equipment route selection policy. In this way, the first policy control network element sends third information to the second policy control network element, so that the second policy control network element can determine, based on the third information, whether the first policy control network element can determine the first user equipment route selection policy. If the second policy control network element considers that the first policy control network element can determine the first user equipment route selection policy, the second policy control network element sends second indication information, to indicate that the first policy control network element determines the first user equipment route selection policy. In addition, the second policy control network element may further send second information to the first policy control network element, where the second information is used by the first policy control network element to determine the first user equipment route selection policy. The method shown in FIG. 8 includes the following steps.

810: The first policy control network element sends request information to the second policy control network element, or the second policy control network element receives request information sent by the first policy control network element. Step 810 is similar to step 710 shown in FIG. 7. For specific content, refer to the descriptions of step 710. To avoid redundancy, details are not described herein again.

820: The second policy control network element sends the first indication information to the first policy control network element, or the first policy control network element receives the first indication information sent by the second policy control network element.

The first policy control network element establishes a user equipment policy association between the first policy control network element and the second policy control network element by sending the request information to the second policy control network element, and the second policy control network element sends the first indication information to the first policy control network element.

It should be understood that, the first indication information indicates that the second policy control network element controls determining of the first user equipment route selection policy. There may alternatively be another understanding of controlling, by the second policy control network element, determining of the first user equipment route selection policy. For example, the first indication information indicates to send, to the first policy control network element, related information used to determine the first user equipment route selection policy. Alternatively, the first indication information indicates that the second policy control network element participates in determining the first user equipment route selection policy. Alternatively, the first indication information indicates that the second policy control network element is responsible for determining the first user equipment route selection policy.

Optionally, the first indication information further indicates the first policy control network element to send, to the second policy control network element, information needed for determining the first user equipment route selection policy.

Optionally, the first indication information further indicates second application description information determined by the second policy control network element. It should be understood that the second policy control network element indicates, by using the first indication information, that the second policy control network element controls determining of a first user equipment route selection policy corresponding to the second application description information.

It should be noted that, a case in which the second policy control network element sends the first indication information to the first policy control network element is not limited to occurring after the first policy control network element establishes the user equipment policy association with the second policy control network element by using the request information. Alternatively, the second policy control network element may send the first indication information to the first policy control network element in a process in which the first policy control network element establishes the user equipment policy association with the second policy control network element.

830: The first policy control network element receives first information from an application function network element. Step 830 is similar to step 730 shown in FIG. 7. For specific content, refer to the descriptions of step 730. To avoid redundancy, details are not described herein again.

840: The first policy control network element sends the third information to the second policy control network element.

It should be understood that the second policy control network element determines, based on the third information, whether the first policy control network element can determine the first user equipment route selection policy.

The third information is used to determine whether the first policy control network element can determine the first user equipment route selection policy, and/or the third information is used to determine the second information.

The third information includes one or more of the following: data network name DNN information, single network slice selection assistance information S-NSSAI, application description information, a route selection parameter, route selection priority information, and PDU session type selection information.

Specifically, after the first policy control network element receives the first indication information of the second policy control network element, the first policy control network element sends, to the second policy control network element, the information used to determine the first user equipment route selection policy, that is, the first policy control network element sends the third information to the second policy control network element, or the second policy control network element receives the third information sent by the first policy control network element.

It should be understood that the second policy control network element determines, based on the third information, a user equipment route selection policy corresponding to application description information in the third information.

Optionally, the second policy control network element determines the second information based on the third information, where the second information includes a part or all of the third information.

Specific parameter content in the third information may be separately transmitted in a form of independent parameters, or may be transmitted in a same piece of information. This is not limited in this application.

It should be understood that, a case in which the first policy control network element sends the third information to the second policy control network element is not limited to occurring after the first policy control network element receives the first indication information sent by the second policy control network element. Alternatively, the first policy control network element may send the third information to the second policy control network element according to an internal protocol of the first policy control network element, according to a protocol between a home network of a user and a visited network of the user, or based on another information indication. This is not limited in this application.

It should be further understood that the third information includes a part or all of the first information. In an example, when the third information includes the application description information, the second policy control network element determines that an application service in the third information may be used by the first policy control network element to determine the first user equipment route selection policy for first user equipment. The second policy control network element sends the second indication information to the first policy control network element, where the second indication information indicates that the first policy control network element determines the first user equipment route selection policy.

It should be noted that sending, by the first policy control network element, the third information to the second policy control network element may alternatively be actively sending the third information to the second policy control network element according to a protocol of the first policy control network element or sending the third information based on another information indication. This is not limited in this application.

It should be further noted that the third information is not limited to being sent after the first policy control network element receives the first indication information from the second policy control network element. The third information may alternatively be sent to the second policy control network element at the same time with the first indication information.

850: The second policy control network element determines that the first policy control network element may determine the first user equipment route selection policy, and the second policy control network element sends the second indication information and/or the second information to the first policy control network element, or the first policy control network element receives the second indication information and/or the second information sent by the second policy control network element.

When the second policy control network element sends the second indication information and the second information to the first policy control network element, the second indication information and the second information may be sent to the first policy control network element in one piece of information, or may be sent to the first policy control network element in a plurality of pieces of information.

Specifically, the second policy control network element sends the second indication information to the first policy control network element. The second indication information indicates that the first policy control network element determines the first user equipment route selection policy. For details, refer to the descriptions of step 720 in FIG. 7. To avoid redundancy, details are not described herein again.

It should be noted that a first application in the second indication information may be an application corresponding to the application description information in the third information, or may be other application corresponding to other application information.

The second policy control network element determines that the first policy control network element may determine the first user equipment route selection policy, and the first policy control network element receives the second information from the second policy control network element, or the second policy control network element sends the second information to the first policy control network element, as described in step 620 in FIG. 6. To avoid redundancy, details are not described herein again.

Optionally, the second information is generated by the second policy control network element based on the third information, and/or the second information is generated by the second policy control network element based on information used by the second policy control network element to determine the first user equipment route selection policy.

860: The first policy control network element determines the first user equipment route selection policy.

It should be understood that when the first policy control network element receives the second indication information sent by the second policy control network element, and the second indication information indicates that the first policy control network element determines the first user equipment route selection policy, the first policy control network element determines the first user equipment route selection policy based on the first information. When the first policy control network element receives the second information sent by the second policy control network element, the first policy control network element determines the first user equipment route selection policy based on the first information and the second information. When the first policy control network element receives the second indication information and the second information that are sent by the second policy control network element, the first policy control network element determines the first user equipment route selection policy based on the first information and the second information.

The second indication information indicates that the first policy control network element determines the first user equipment route selection policy, and/or the second indication information further indicates that the first policy control network element determines a first user equipment route selection policy corresponding to the first application. The first policy control network element receives the second indication information and determines the first user equipment route selection policy. For detailed steps, refer to the descriptions in step 740 of FIG. 7. To avoid redundancy, details are not described herein again.

The first policy control network element determines the first user equipment route selection policy and sends the first user equipment route selection policy to the first user equipment.

870: The first policy control network element sends the first user equipment route selection policy to the first user equipment, and correspondingly, the first user equipment receives the first user equipment route selection policy from the first policy control network element. Step 870 is similar to step 750 shown in FIG. 7. To avoid redundancy, details are not described herein again.

880: The first user equipment receives the first user equipment route selection policy, and executes the received first user equipment route selection policy. Step 880 is similar to step 760 shown in FIG. 7. To avoid redundancy, details are not described herein again.

890: The first user equipment deletes an invalid user equipment route selection policy. Step 890 is similar to step 770 shown in FIG. 7. To avoid redundancy, details are not described herein again.

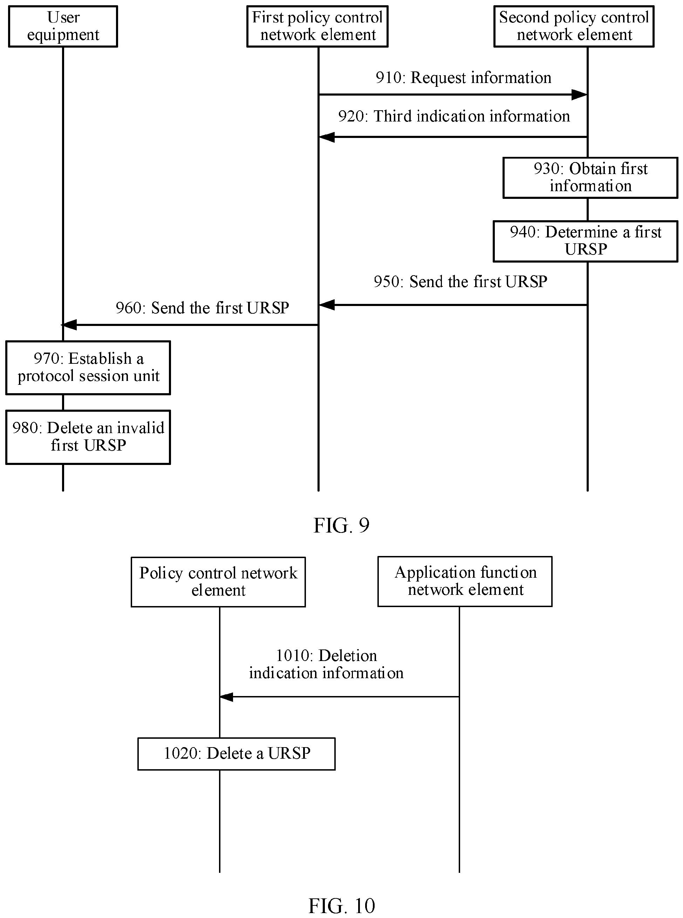

FIG. 9 is a schematic diagram of another method for determining a user equipment route selection policy according to an embodiment of this application. A difference between the method for determining a user equipment route selection policy shown in FIG. 9 and the methods shown in FIG. 7 and FIG. 8 lies in that, in the method shown in FIG. 9, a second policy control network element determines a first user equipment route selection policy based on obtained first information. The method shown in FIG. 9 includes the following steps.

910: A first policy control network element sends request information to the second policy control network element, or the second policy control network element receives request information sent by the first policy control network element. Step 910 is similar to step 710 shown in FIG. 7. To avoid redundancy, details are not described herein again.

920: The second policy control network element sends third indication information to the first policy control network element, or the first policy control network element receives third indication information from the second policy control network element.

It should be understood that the first policy control network element sends the request information to the second policy control network element, a user equipment policy association for user equipment is established between the first policy control network element and the second policy control network element, and the second policy control network element sends the third indication information to the first policy control network element. The third indication information indicates that the second policy control network element determines the first user equipment route selection policy.

Optionally, the third indication information further indicates the first policy control network element to send, to the second policy control network element, information used to determine the first user equipment route selection policy. The first policy control network element receives the third indication information sent by the second policy control network element, and the first policy control network element sends, to the second policy control network element based on the third indication information, the information used to determine the first user equipment route selection policy.

For example, after the first policy control network element receives the first information that is from an application function and that is used to determine the first user equipment route selection policy, the first policy control network element sends the first information to the second policy control network element based on the third indication information.

It should be understood that the first policy control network element may receive and obtain more information (for example, the first information used to determine the first user equipment route selection policy and other information irrelevant to the first user equipment route selection policy) from the application function. The first policy control network element determines, from the received information, the first information used by the second policy control network element to determine the first user equipment route selection policy, and sends the first information to the second policy control network element.

Optionally, after the first policy control network element receives the first information from the application function, the first policy control network element sends all or a part of the first information to the second policy control network element according to a protocol of the first policy control network element or based on other information, without a need to send all or the part of the first information based on the third indication information.

930: The second policy control network element obtains the first information.

There are a plurality of manners in which the second policy control network element obtains the first information. For example, when the first information is from the application function, specific possible implementations are as follows:
Manner 1: An application function network element first sends the first information to a network exposure network element (NEF) in a visited network, the network exposure network element sends the first information to the first policy control network element, and the first policy control network element sends the first information to the second policy control network element.

Optionally, the first policy control network element sends the first information to the second policy control network element based on the third indication information.

Manner 2: An application function network element first sends the first information to a network exposure network element (NEF) in a visited network, the NEF in the visited network sends the first information to a NEF in a home network, and the NEF in the home network sends the first information to the second policy control network element.

Manner 3: An application function network element first sends the first information to a network exposure network element (NEF) in a visited network, and the NEF in the visited network sends the first information to the second policy control network element.

Manner 4: An application function network element first sends the first information to a network exposure network element (NEF) in a visited network, the NEF in the visited network sends the first information to a data management network element in a home network, and then the data management network element in the home network sends the first information to the second policy control network element.

The manner in which the second policy control network element obtains the first information is not limited to the foregoing four manners, and may be another manner. This is not limited in this application.

940: The second policy control network element determines the first user equipment route selection policy based on the obtained first information.

It should be understood that when the second policy control network element determines the first user equipment route selection policy, the second policy control network element or another policy control network element does not need to determine related parameter information, and the second policy control network element may directly determine the first user equipment route selection policy based on the first information.

950: The second policy control network element sends the first user equipment route selection policy to first user equipment, or the first user equipment receives the first user equipment route selection policy from the second policy control network element.

A possible implementation is as follows: The second policy control network element sends the first user equipment route selection policy to the first policy control network element, and the first policy control network element sends the first user equipment route selection policy to the first user equipment.

960: The first policy control network element sends the first user equipment route selection policy to the first user equipment, and correspondingly, the first user equipment receives the first user equipment route selection policy from the first policy control network element. Step 960 is similar to step 750 shown in FIG. 7. To avoid redundancy, details are not described herein again.

970: The first user equipment receives the first user equipment route selection policy, and executes the received first user equipment route selection policy. Step 970 is similar to step 760 shown in FIG. 7. To avoid redundancy, details are not described herein again.

980: The first user equipment deletes an invalid user equipment route selection policy. Step 980 is similar to step 770 shown in FIG. 7. To avoid redundancy, details are not described herein again.

It should be noted that, in the method shown in FIG. 9, step 910 and step 920 are optional steps. In some implementations, offline negotiation is performed between the visited network and the home network. For example, an SLA contract is signed to specify that the second policy control network element determines the first user equipment route selection policy and/or specify that the first policy control network element sends, to the second policy control network element, the information used to determine the first user equipment route selection policy.

FIG. 10 is a schematic diagram of a method for deleting a user equipment route selection policy according to this application. The method for deleting a user equipment route selection policy may be applied to the methods shown in FIG. 6 to FIG. 9, or may be applied to another method for determining a route selection policy. This is not limited in this application.

1010: A policy control network element receives deletion indication information from an application function network element.

It should be understood that the deletion indication information is used to delete the user equipment route selection policy. Therefore, the deletion indication information includes service description information related to the user equipment route selection policy that needs to be deleted. The service description information may include one or more of the following: data network name DNN information, single network slice selection assistance information S-NSSAI, and information about an application identifier (Application identifier).

It should be understood that when the policy control network element is a first policy control network element, the first policy control network element receives the deletion indication information sent by the application function network element. When the policy control network element is a second policy control network element, the second policy control network element receives the deletion indication information sent by the application function network element.

It should be further understood that, in this application, the first policy control network element may receive the deletion indication information from the application function network element via another network element. For example, the application function network element first sends the deletion indication information to a network exposure network element (NEF), and the network exposure network element (NEF) deletes a corresponding stored user equipment route selection policy based on the deletion indication information. Then, the network exposure network element sends the deletion indication information to the first policy control network element, and the first policy control network element deletes the corresponding stored user equipment route selection policy. For another example, the application function network element sends the deletion indication information to a data management network element (a unified data repository network element (UDR) and/or a unified data management network element (UDM)) via a network exposure network element. The data management network element deletes a corresponding stored user equipment route selection policy, and then the data management network element sends the deletion indication information to the first policy control network element.

1020: The policy control network element deletes the user equipment route selection policy.

In a possible implementation, the policy control network element is the first policy control network element, and 1020 may be understood as: The first policy control network element determines the first user equipment route selection policy, and the first policy control network element deletes the corresponding user equipment route selection policy based on the service description information that is of the user equipment route selection policy and that is in the deletion indication information. A specific procedure is shown in FIG. 7 and FIG. 8, and details are not described herein again.

In another possible implementation, the policy control network element is the second policy control network element, and 1020 may be understood as: The second policy control network element determines the user equipment route selection policy. The first policy control network element receives the deletion indication information from the application function network element. The first policy control network element sends the deletion indication information to the second policy control network element, and the second policy control network element deletes, based on the received deletion indication information, the user equipment route selection policy corresponding to the service description information. A specific procedure is shown in FIG. 9, and details are not described herein again.

For example, the application function network element sends the deletion indication information to the data management network element (the unified data repository network element (UDR) and/or the unified data management network element (UDM)) via the network exposure network element. The data management network element deletes the corresponding stored user equipment route selection policy, and then the data management network element sends the deletion indication information to the first policy control network element. After the first policy control network element deletes the corresponding user equipment route selection policy based on the service description information in the deletion indication information, the first policy control network element sends the deletion indication information to the second policy control network element. The second policy control network element deletes, based on the received deletion indication information, the user equipment route selection policy corresponding to the service description information.

The deletion indication information may indicate to delete a related parameter used to determine the user equipment route selection policy. There are many forms of deletion indication information. This is not limited in this application.

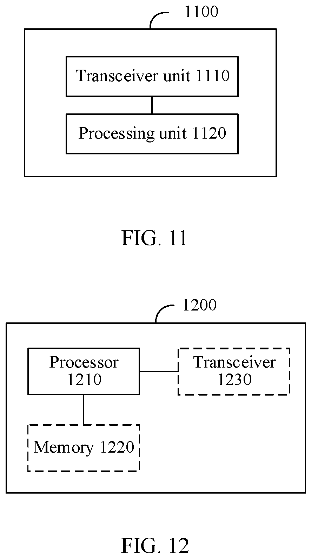

The foregoing describes in detail the method for determining a user equipment route selection policy provided in embodiments of this application with reference to FIG. 6 to FIG. 10. The following describes in detail apparatuses for determining a user equipment route selection policy provided in embodiments of this application with reference to FIG. 11 and FIG. 12.

The following describes in detail the apparatuses for determining the user equipment route selection policy according to an embodiment of this application in FIG. 11 and FIG. 12. It should be understood that descriptions of an apparatus embodiment correspond to the descriptions of the method embodiments. Therefore, for content that is not described in detail, refer to the foregoing method embodiments. For brevity, some content is not described again.

FIG. 11 is a schematic block diagram of an apparatus for determining a user equipment route selection policy according to an embodiment of this application. The apparatus 1100 includes a transceiver unit 1110 and a processing unit 1120. The transceiver unit 1110 may be configured to implement a corresponding communication function. The transceiver unit 1010 may also be referred to as a communication interface or a communication unit. The processing unit 1120 may be configured to implement a corresponding processing function, for example, modifying an address.

Optionally, the apparatus 1100 further includes a storage unit. The storage unit may be configured to store instructions and/or data. The processing unit 1020 may read the instructions and/or data in the storage unit, to enable the apparatus to implement actions of the device or network element in the foregoing method embodiments.

In a first design, the apparatus 1100 may be the first policy control network element in the foregoing embodiment, or may be a component (for example, a chip) of the first policy control network element. The apparatus 1100 may implement steps or procedures performed by the first policy control network element in the foregoing method embodiments. The transceiver unit 1110 may be configured to perform operations related to sending and receiving of the first policy control network element in the foregoing method embodiments. The processing unit 1120 may be configured to perform operations related to processing of first policy control in the foregoing method embodiments.

In a possible implementation, the transceiver unit 1110 is configured to obtain first information, where the first information is used to determine a first user equipment route selection policy. The transceiver unit 1110 is further configured to send the first user equipment route selection policy to first user equipment, where the first policy control network element belongs to a visited network of the first user equipment.

For example, the first information includes identification information of the first user equipment; or the first information includes identification information of a user equipment group to which the first user equipment belongs.

For example, the first information further includes first application description information and/or a route selection parameter.

For example, the first information further includes data network name DNN information and/or network slice selection information.

Optionally, the processing unit 1120 determines the first user equipment route selection policy based on the first information.

Optionally, the first information is from an application function. The transceiver unit 1110 receives second information from a second policy control network element. That the processing unit 1120 determines the first user equipment route selection policy based on the first information includes: The processing unit 1120 determines the first user equipment route selection policy based on the first information and the second information, where the second policy control network element belongs to a home network of the first user equipment.

Optionally, the transceiver unit 1110 is configured to obtain the first information, where the first information is from a data management network element or a network exposure network element, and the data management network element and the network exposure network element belong to the visited network of the first user equipment.

Optionally, the transceiver unit 1110 is further configured to receive first indication information from the second policy control network element, where the first indication information indicates that the second policy control network element controls determining of the first user equipment route selection policy.

Optionally, the transceiver unit 1110 is further configured to receive the first indication information from the second policy control network element, where the first indication information indicates that the second policy control network element determines a second application description.

Optionally, the transceiver unit 1110 is further configured to receive second indication information from the second policy control network element, where the second indication information indicates that the processing unit 1120 determines the first user equipment route selection policy.

Optionally, the transceiver unit 1110 is further configured to receive the second indication information from the second policy control network element, where the second indication information indicates that the processing unit 1120 determines a user equipment route selection policy corresponding to a first application.

Optionally, the transceiver unit 1110 is further configured to send third information to the second policy control network element, where the third information includes one or more of the following: the data network name DNN information, single network slice selection assistance information S-NSSAI, application description information, the route selection parameter, and route selection priority information.

Optionally, the transceiver unit 1110 is further configured to receive deletion indication information, and the processing unit 1120 deletes a user equipment route selection policy based on the deletion indication information.

In a second design, the apparatus 1000 may be the second policy control network element in the foregoing embodiment, or may be a component (for example, a chip) of the second policy control network element. The apparatus 1100 may implement steps or procedures performed by the second policy control network element in the foregoing method embodiments. The transceiver unit 1110 is configured to perform operations related to sending and receiving of the second policy control network element in the foregoing method embodiments. The processing unit 1120 is configured to perform operations related to processing of the second policy control network element in the foregoing method embodiments.

In a possible implementation, the processing unit 1120 is used by a second policy control network element that belongs to a home network to determine second information, where the second information is used to determine a first user equipment route selection policy. The transceiver unit 1010 is configured to send the second information to a first policy control network element that belongs to a visited network, where the first policy control network element belongs to the visited network of first user equipment, and the second policy control network element belongs to the home network of the first user equipment.

For example, the second information includes one or more of the following: application description information, network slice selection information, SSC mode selection information, data network name DNN information, PDU session type selection information, non-seamless offloading indication information, or access type priority information.

Optionally, the transceiver unit 1110 is further configured to send first indication information to the first policy control network element, where the first indication information indicates that the processing unit 1120 controls determining of the first user equipment route selection policy.

Optionally, the transceiver unit 1110 is further configured to send the first indication information to the first policy control network element, where the first indication information further indicates a second application description determined by the processing unit 1120.

Optionally, the transceiver unit 1110 is further configured to send second indication information to the first policy control network element, where the second indication information indicates that the processing unit 1120 determines the first user equipment route selection policy.

Optionally, the transceiver unit 1110 is further configured to send the second indication information to the first policy control network element, where the second indication information further indicates that the processing unit 1120 determines the first user equipment route selection policy corresponding to a first application.

Optionally, the transceiver unit 1110 is further configured to send one or more of the following to the first policy control network element: the data network name DNN information, single network slice selection assistance information S-NSSAI, the application description information, a route selection parameter, and route selection priority information.

In a third design, the apparatus 1100 may be the user equipment in the foregoing embodiment, or may be a component (for example, a chip) of the user equipment. The apparatus 1100 may implement steps or procedures performed by the user equipment in the foregoing method embodiments. The transceiver unit 1110 is configured to perform operations related to sending and receiving of the user equipment in the foregoing method embodiments. The processing unit 1120 is configured to perform operations related to processing of the user equipment in the foregoing method embodiments.

In a possible implementation, the transceiver unit 1110 is configured to receive a first user equipment route selection policy determined by a first policy control network element. The processing unit 1120 is configured to establish a protocol data unit session based on the first user equipment route selection policy, where the first policy control network element belongs to a visited network of first user equipment.

Optionally, the transceiver unit 1110 is further configured to receive identification information of the visited network from the first policy control network element. That the processing unit 1120 establishes the protocol data unit session based on the first user equipment route selection policy includes: The processing unit 1120 establishes the protocol data unit session based on the identification information of the visited network and the first user equipment route selection policy.

Optionally, the processing unit 1120 is further configured to delete an invalid first user equipment route selection policy.

It should be understood that a specific process in which the units perform the foregoing corresponding steps is described in detail in the foregoing method embodiments. For brevity, details are not described herein.

It should be further understood that the apparatus 1100 herein is embodied in a form of a function unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the first policy control network element in the foregoing embodiment, and may be configured to perform procedures and/or steps corresponding to the first policy control network element in the foregoing method embodiments. Alternatively, the apparatus 1100 may be specifically the second policy control network element in the foregoing embodiment, and may be configured to perform procedures and/or steps corresponding to the second policy control network element in the foregoing method embodiments. Alternatively, the apparatus 1100 may be specifically the user equipment in the foregoing embodiments, and may be configured to perform procedures and/or steps corresponding to the user equipment in the foregoing method embodiments. To avoid repetition, details are not described herein again.

The apparatus 1100 in each of the foregoing solutions has functions of implementing corresponding steps performed by the first policy control network element, the second policy control network element, or the user equipment in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, the sending unit in the transceiver unit may be replaced by a transmitter, and the receiving unit in the transceiver unit may be replaced by a receiver). Another unit, such as a processing unit, may be replaced by a processor to separately perform a sending and receiving operation and a related processing operation in each method embodiment.

In addition, the transceiver unit 1110 may alternatively be a transceiver circuit (for example, may include a receiving circuit and a sending circuit), and the processing unit may be a processing circuit.

It should be noted that the apparatus in FIG. 11 may be the network element or the device in the foregoing embodiments, or may be a chip or a chip system, for example, a system-on-a-chip (system-on-a-chip, SoC). The transceiver unit may be an input/output circuit or a communications interface. The processing unit is a processor, a microprocessor, or an integrated circuit integrated on the chip. This is not limited herein.

As shown in FIG. 12, a schematic block diagram of another apparatus for determining a user equipment route selection policy is provided in an embodiment of this application. The apparatus 1200 includes a processor 1210. The processor 1210 is configured to execute a computer program or instructions stored in a memory 1220, or read data/signaling stored in the memory 1220, to perform the methods in the foregoing method embodiments. Optionally, there are one or more processors 1210.

Optionally, as shown in FIG. 12, the apparatus 1200 further includes the memory 1220. The memory 1220 is configured to store a computer program or instructions and/or data. The memory 1220 may be integrated with the processor 1210, or may be disposed separately. Optionally, there are one or more memories 1220.

Optionally, as shown in FIG. 12, the apparatus 1200 further includes a transceiver 1230, and the transceiver 1230 is configured to receive and/or send a signal. For example, the processor 1210 is configured to control the transceiver 1230 to receive and/or send the signal.

In a solution, the apparatus 1200 is configured to implement operations performed by the network element in the foregoing method embodiments.

For example, the processor 1210 is configured to execute the computer program or instructions stored in the memory 1220, to implement related operations of the first policy control network element in the foregoing method embodiments, for example, the method performed by the first policy control network element in any one of the embodiments shown in FIG. 6 to FIG. 10.

It should be understood that the processor mentioned in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) may be integrated into the processor.

It should further be noted that the memory described herein is intended to include, but is not limited to, these memories and any memory of another proper type.

An embodiment of this application further provides a computer-readable storage medium. The computer-readable storage medium stores computer instructions used to implement the method performed by the network element in the foregoing method embodiments.

For example, when the computer program is executed by a computer, the computer can implement the method performed by the first policy control network element in the foregoing method embodiments.

For another example, when the computer program is executed by the computer, the computer can implement the method performed by the second policy control network element in the foregoing method embodiments.

For another example, when the computer program is executed by the computer, the computer can implement the method performed by a user equipment discovery network element in the foregoing method embodiments.

An embodiment of this application further provides a computer program product, including instructions. When the instructions are executed by a computer, the method performed by the network element or user equipment in the foregoing method embodiments is implemented.

An embodiment of this application further provides a communication system, including one or more of the foregoing first policy control network element, second policy control network element, and user equipment.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, and a magnetic tape), an optical medium (for example, a DVD), a semiconductor medium (for example, a solid-state drive (solid state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A method for determining a route selection policy, comprising:
obtaining, by a first policy control network element, first information, wherein the first information is used to determine a first user equipment route selection policy; and
sending, by the first policy control network element, the first user equipment route selection policy to first user equipment, wherein
the first policy control network element belongs to a visited network of the first user equipment.

2. The method according to claim 1, wherein the first information comprises identification information of the first user equipment; or
the first information comprises identification information of a user equipment group to which the first user equipment belongs.

3. The method according to claim 1 or 2, wherein the first information further comprises first application description information and/or a route selection parameter.

4. The method according to any one of claims 1 to 3, wherein the method further comprises:
determining, by the first policy control network element, the first user equipment route selection policy based on the first information.

5. The method according to claim 4, wherein the first information is from an application function network element, and the method further comprises:
receiving, by the first policy control network element, second information from a second policy control network element; and
the determining, by the first policy control network element, the first user equipment route selection policy based on the first information comprises:
determining, by the first policy control network element, the first user equipment route selection policy based on the first information and the second information, wherein
the second policy control network element belongs to a home network of the first user equipment.

6. The method according to any one of claims 1 to 5, wherein the obtaining, by a first policy control network element, first information comprises: receiving, by the first policy control network element, the first information from a data management network element or a network exposure network element, wherein
the data management network element and the network exposure network element belong to the visited network of the first user equipment.

7. The method according to any one of claims 1 to 6, wherein before the determining, by the first policy control network element, the first user equipment route selection policy based on the first information, the method further comprises:
sending, by the first policy control network element, third information to the second policy control network element, wherein the third information comprises one or more of the following:
data network name DNN information, single network slice selection assistance information S-NSSAI, the first application description information, the route selection parameter, and route selection priority information.

8. The method according to any one of claims 1 to 7, wherein the method further comprises:
receiving, by the first policy control network element, first indication information from the second policy control network element, wherein the first indication information indicates that the second policy control network element controls determining of the first user equipment route selection policy.

9. The method according to claim 8, wherein the first indication information further indicates second application description information determined by the second policy control network element.

10. The method according to any one of claims 1 to 9, wherein before the determining, by the first policy control network element, the first user equipment route selection policy based on the first information, the method further comprises:
receiving, by the first policy control network element, second indication information from the second policy control network element, wherein the second indication information indicates that the first policy control network element determines the first user equipment route selection policy.

11. The method according to claim 10, wherein the second indication information further indicates that the first policy control network element determines the first user equipment route selection policy corresponding to a first application.

12. The method according to any one of claims 1 to 11, wherein the method further comprises:
receiving, by the first policy control network element, deletion indication information; and
deleting, by the first policy control network element, the first user equipment route selection policy based on the deletion indication information.

13. The method according to any one of claims 5 to 12, wherein the second information comprises one or more of the following:
application description information, network slice selection information, session and service continuity SSC mode selection information, the data network name DNN information, protocol data unit PDU session type selection information, non-seamless offloading indication information or access type priority information, and the route selection parameter.

14. The method according to any one of claims 1 to 13, wherein the first information further comprises the data network name DNN information and/or the network slice selection information.

15. The method according to any one of claims 1 to 14, wherein the method further comprises:
sending, by the first policy control network element, identification information of the visited network to the first user equipment.

16. A method for determining a user equipment route selection policy, comprising:
determining, by a second policy control network element, second information, wherein the second information is used to determine a first user equipment route selection policy; and
sending, by the second policy control network element, the second information to a first policy control network element, wherein
the first policy control network element belongs to a visited network of first user equipment, and the second policy control network element belongs to a home network of the first user equipment.

17. The method according to claim 16, wherein the method further comprises:
receiving, by the second policy control network element, third information sent by the first policy control network element, wherein the third information comprises one or more of the following:
data network name DNN information, single network slice selection assistance information S-NSSAI, first application description information, a route selection parameter, and route selection priority information.

18. The method according to claim 15 or 16, wherein the method further comprises:
sending, by the second policy control network element, first indication information to the first policy control network element, wherein the first indication information indicates that the second policy control network element controls determining of the first user equipment route selection policy.

19. The method according to claim 17, wherein first indication information further indicates second application description information determined by the second policy control network element.

20. The method according to any one of claims 16 to 19, wherein the method further comprises:
sending, by the second policy control network element, second indication information to the first policy control network element, wherein the second indication information indicates that the first policy control network element determines the first user equipment route selection policy.

21. The method according to claim 20, wherein the second indication information further indicates that the first policy control network element determines the first user equipment route selection policy corresponding to a first application.

22. The method according to any one of claims 16 to 21, wherein the second information comprises one or more of the following:
application description information, network slice selection information, session and service continuity SSC mode selection information, the data network name DNN information, protocol data unit PDU session type selection information, non-seamless offloading indication information or access type priority information, and the route selection parameter.

23. A method for determining a user equipment route selection policy, comprising:
receiving, by first user equipment, a first user equipment route selection policy determined by a first policy control network element; and
establishing, by the first user equipment, a protocol data unit session based on the first user equipment route selection policy, wherein
the first policy control network element belongs to a visited network of the first user equipment.

24. The method according to claim 23, wherein the method further comprises:
receiving, by the first user equipment, identification information of the visited network from the first policy control network element; and
the establishing, by the first user equipment, a protocol data unit session based on the first user equipment route selection policy comprises:
establishing, by the first user equipment, the protocol data unit session based on the identification information of the visited network and the first user equipment route selection policy.

25. The method according to claim 23 or 24, wherein the method further comprises:
deleting, by the first user equipment, an invalid user equipment route selection policy.

26. A communication apparatus, wherein the apparatus comprises: a unit configured to perform the method according to any one of claims 1 to 15, a unit configured to perform the method according to any one of claims 16 to 22, or a unit configured to perform the method according to any one of claims 23 to 25.

27. A communication apparatus, comprising:
a processor, configured to execute a computer program stored in a memory, to enable the apparatus to perform the method according to any one of claims 1 to 15, the method according to any one of claims 16 to 22, or the method according to any one of claims 23 to 25.

28. The apparatus according to claim 27, wherein the apparatus further comprises the memory.

29. A computer-readable storage medium, wherein the computer-readable storage medium stores a computer program, and when the computer program is run on a computer, the computer is enabled to perform the method according to any one of claims 1 to 15, the method according to any one of claims 16 to 22, or the method according to any one of claims 23 to 25.

30. A computer program product, wherein the computer program product comprises instructions used to perform the method according to any one of claims 1 to 15, instructions used to perform the method according to any one of claims 16 to 22, or instructions used to perform the method according to any one of claims 23 to 25.

31. A communication system, comprising a first policy management network element and a second policy management network element, wherein
the first policy management network element is configured to perform the method according to any one of claims 1 to 15;
the second policy management network element is configured to perform the method according to any one of claims 16 to 22; and
the first policy management network element belongs to a visited network of first user equipment, and the second policy management network element belongs to a home network of the first user equipment.

32. A method for determining a user equipment route selection policy, comprising:
determining, by a second policy control network element, second information, wherein the second information is used to determine a first user equipment route selection policy; and
receiving, by a first policy control network element, the second information sent by the second policy control network element, wherein
the first policy control network element belongs to a visited network of first user equipment, and the second policy control network element belongs to a home network of the first user equipment.
